# EUROPEAN PATENT APPLICATION

(11) **EP 3 626 799 A1**
(43) Date of publication of application: **25.03.2020**
(21) Application number: 18802094.5
(22) Date of filing: 17.05.2018
(51) Int. Cl.: C09K 5/04, C09K 3/30, C11D 7/30

(54) **COMPOSITION CONTAINING COMPOUND USEFUL AS REFRIGERANT, DETERGENT, PROPELLANT, OR THE LIKE, AND REFRIGERATING MACHINE, LARGE-SIZED AIR CONDITIONER, OR INDUSTRIAL PROCESS COOLER EACH INCLUDING SAID COMPOSITION**

(30) Priority: 17.05.2017 JP 2017098483
(71) Applicant: Daikin Industries, Ltd., Osaka-shi, Osaka 530-8323 (JP)
(72) Inventor: YOTSUMOTO, Yuuki, Osaka-shi Osaka 530-8323 (JP); KARUBE, Daisuke, Osaka-shi Osaka 530-8323 (JP); YAMADA, Yasufu, Osaka-shi Osaka 530-8323 (JP)
(74) Representative: Hoffmann Eitle
(86) International application number: PCT/JP2018/019202
(87) International publication number: WO 2018/212308

(57) **Abstract**

This invention provides a composition comprising a compound that has low GWP in spite of having low flammability, and that is less likely to lead to a negative-pressure state during operation even when applied to a large air conditioner; and to a refrigerating machine, large air conditioner, or industrial process cooler, each comprising the composition.

Specifically, the present invention provides a composition comprising a refrigerant, the refrigerant comprising a compound represented by the following general formula (1): CmHnFxCly (1)
wherein m is 4≤m≤10, n+x+y is equal to 2m-2, and the compound has a triple bond in its molecule.

## Description

### Technical Field

The present invention relates to a composition comprising a compound useful as a refrigerant, detergent, propellant, etc., and to a refrigerating machine, large air conditioner, or industrial process cooler, each comprising the composition.

### Background Art

As refrigerants (including working media for heating cycles) for refrigerating machines, large air conditioners, and industrial process coolers, hydrofluorocarbons (HFCs) such as difluoromethane (HFC-32), tetrafluoroethane, and pentafluoroethane, which have low impact on the ozone layer, have mainly been used. However, HFCs have high GWP (global warming potential), and it has been pointed out that HFCs can cause global warming. Thus, demand for refrigerants having low GWP has increased.

In view of these circumstances, as refrigerants having reduced GWP, 1-chloro-1,2-difluoroethylene (HCFO-1122), 1-chloro-3,3,3-trifluoropropene (HCFO-1233zd), and the like are suggested among hydrofluoroolefin (HFO) refrigerants having an equivalent capacity to HFC refrigerants. Specifically, Patent Literature 1 discloses the use of HCFO-1122 as a working medium for a heating cycle system.

However, HFO refrigerants have insufficient refrigerating capacity, and there is room for improvement. Additionally, HCFO-1233zd, which has a high boiling point, leads to a negative-pressure state during the operation of an apparatus, which causes a risk of pipe corrosion due to entrapped air; and thus, HCFO-1233zd cannot be easily applied in large air conditioners.

### Citation List

### Patent Literature

PTL 1: WO2012/157762

### Summary of Invention

### Technical Problem

The present invention was made in light of the problems of the prior art. The main object of the present invention is to provide the following: a composition comprising a compound that has excellent refrigerating capacity, and low GWP in spite of having low flammability, and that is less likely to lead to a negative-pressure state during operation even when applied in a large air conditioner; and a refrigerating machine, large air conditioner, or industrial process cooler, each comprising the composition. The compound can also be used for applications such as detergents or propellants in addition to refrigerants; another object of the present invention is to provide a composition that comprises the compound used for the above applications.

### Solution to Problem

As a result of conducting extensive research to achieve the above objects, the present inventors found that the objects can be achieved by a specific compound, and they accomplished the present invention.

Specifically, the present invention relates to a composition and to a refrigerating machine, a large air conditioner, or an industrial process cooler, each comprising the composition, described below.
Item 1. A composition comprising a refrigerant, the refrigerant comprising a compound represented by the following general formula (1):

   CmHnFxCly (1)

   wherein m is 4≤m≤10, n+x+y is equal to 2m-2, and the compound has a triple bond in its molecule.
Item 2. The composition according to Item 1, wherein the compound has a boiling point of -15 to 200°C.
Item 3. The composition according to Item 1, wherein the compound has a boiling point of -15 to -5°C.
Item 4. The composition according to Item 1, wherein the compound is pentafluorobutyne.
Item 5. The composition according to any one of Items 1 to 4, wherein the refrigerant comprises at least one member selected from the group consisting of acetone, R23, R125, methylene chloride, 3,3,3-trifluoropropyne, and acetylene, and the total amount of acetone, R23, R125, methylene chloride, 3,3,3-trifluoropropyne, and acetylene is less than 5 mass% relative to the entire refrigerant.
Item 6. The composition according to any one of Items 1 to 5, wherein the composition further comprises a refrigerant oil and is used as a refrigerant oil-containing working fluid.
Item 7. A refrigerating machine, large air conditioner, or industrial process cooler, each comprising the composition according to any one of Items 1 to 6 as a working fluid.
Item 8. The refrigerating machine, large air conditioner, or industrial process cooler according to Item 7, which is a room air conditioner, packaged air conditioner for stores, packaged air conditioner for buildings, packaged air conditioner for equipment, separate air conditioner in which one or more indoor units and outdoor units are interconnected with a refrigerant pipe, window air conditioner, portable air conditioner, roof top or central air conditioner in which cold air and warm air are conveyed through a duct, gas engine heat pump, air conditioner for trains, air conditioner for automobiles, built-in showcase, separate showcase, refrigerator freezer for business, ice machine, integrated refrigerating machine, vending machine, car air conditioner, refrigerating machine for cooling containers or refrigerators for marine shipping, chiller unit, turbo refrigerating machine, or apparatus exclusively used for a heating cycle.
Item 9. A composition comprising a compound represented by the following general formula (1):

   CmHnFxCly (1)

   wherein m is 4≤m≤10, n+x+y is equal to 2m-2, and the compound has a triple bond in its molecule, and
   the composition being used for detergents or propellants.
Item 10. The composition according to Item 9, wherein the compound has a boiling point of -15 to 200°C.
Item 11. The composition according to Item 9, wherein the compound has a boiling point of -15 to -5°C.
Item 12. The composition according to Item 9, wherein the compound is pentafluorobutyne.
Item 13. The composition according to any one of Items 9 to 12, comprising at least one member selected from the group consisting of acetone, R23, R125, methylene chloride, 3,3,3-trifluoropropyne, and acetylene,
   wherein the total amount of acetone, R23, R125, methylene chloride, 3,3,3-trifluoropropyne, and acetylene is less than 5 mass% relative to the total amount of the compound, acetone, R23, R125, methylene chloride, 3,3,3-trifluoropropyne, and acetylene

### Advantageous Effects of Invention

The composition of the present invention comprises a compound that exhibits excellent refrigerating capacity, and low GWP in spite of having low flammability, and that is less likely to lead to a negative-pressure state during operation even when applied in a large air conditioner. Such a composition can be suitably used for refrigerating machines, large air conditioners, or industrial process coolers. Specifically, the compound is suitable as a refrigerant and is highly useful as compared to conventional HFO refrigerants because it is applicable in a large air conditioner. Additionally, the compound is also useful for applications such as detergents or propellants in addition to refrigerants. A composition comprising the compound is also suitable for applications such as detergents or propellants.

### Description of Embodiments

The composition according to the present invention, and the refrigerating machine, large air conditioner, or industrial process cooler, each comprising the above composition, are explained below. First, the compound that is contained in the composition and that is represented by the following general formula (1): CmHnFxCly (1) (hereinbelow sometimes also referred to as "the compound of the present invention"), wherein m is 4≤m≤10, n+x+y is equal to 2m-2, and the compound has a triple bond in its molecule, is explained below.

The compound of the present invention, which has the above specific formulation, can be suitably used for at least one application selected from the group consisting of refrigerants, detergents, and propellants.

The compound of the present invention exhibits excellent refrigerating capacity, and low GWP in spite of having low flammability, and is less likely to lead to a negative pressure state during operation even when applied in a large air conditioner. Accordingly, the compound of the present invention is useful for a refrigerant, and a composition containing such a compound can be suitably used as a working fluid for refrigerating machines, large air conditioners, or industrial process coolers. The compound of the present invention is also useful for applications such as detergents or propellants in addition to refrigerants, and the composition containing the compound is also suitably used for detergents or propellants.

The term "refrigerant" used in this specification is defined below, and a refrigerant, detergent, and propellant, which are suitable applications of the compound of the present invention, are explained below. A composition containing the compound of the present invention is also useful for applications such as refrigerants (working fluids), detergents, or propellants.

### Definition of terms

In this specification, the term "refrigerant" includes refrigerants that have properties equivalent to compounds that are specified in ISO817 (International Organization for Standardization), and that are given a refrigerant number (ASHRAE number) representing the type of refrigerant with "R" at the beginning. Refrigerants are broadly divided into "fluorocarbon-based compounds" and "non-fluorocarbon-based compounds" in terms of the structure of the compounds. The compound of the present invention represented by general formula (1) is a fluorocarbon-based compound.

The term "composition comprising a refrigerant" used in this specification at least includes:
(1) a refrigerant itself (including a single refrigerant, and a refrigerant mixture, i.e., a "mixed refrigerant");
(2) a composition that can be used for obtaining a working fluid for refrigerating machines by further comprising one or more other components and mixing with at least a refrigerant oil; and
(3) a working fluid for refrigerating machines, containing a refrigerant oil.

Among these three modes, composition (2) is referred to as a "refrigerant composition" in this specification to distinguish it from the refrigerant itself (including a mixed refrigerant). Working fluid for refrigerating machines (3) is referred to as a "refrigerant oil-containing working fluid" to distinguish it from the "refrigerant composition."

In this specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigerant oil, gasket, packing, expansion valve, capillary, dryer, condenser, heat exchanger, control board, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and/or adjustment necessary for replacing the first refrigerant with the second refrigerant is smaller.

The term "alternative" also includes the second type of "alternative," which means that equipment designed for operation using the second refrigerant is operated for the same use as the existing use with the first refrigerant, using the second refrigerant. This type of alternative means that the same use is achieved with an "alternative" refrigerant.

In the present specification, the term "refrigerating machine" refers to machines in general that draw heat from an object or space to make its temperature lower than the temperature of ambient air, and maintain the low temperature. In other words, refrigerating machines refer to conversion machines that gain energy from the outside to do work and that perform energy conversion in order to transfer heat from where the temperature is lower to where the temperature is higher.

### Application of refrigerant, refrigerant composition, and refrigerant oil-containing working fluid

### 1. Refrigerant

### 1.1 Refrigerant component

The compound of the present invention represented by general formula (1): CmHnFxCly (1), wherein m is 4≤m≤10, n+x+y is equal to 2m-2, and the compound has a triple bond in its molecule, can be used for refrigerants.

To explain the application of the refrigerant, refrigerant composition, and refrigerant oil-containing working fluid below, the compound of the present invention is referred to as the "refrigerant of the present invention."

In general formula (1), m may be 4≤m≤10, and is preferably 4≤m≤5. Specifically, the refrigerant of the present invention is a triple bond compound having 4 or more carbon atoms.

The refrigerant of the present invention represented by general formula (1) exhibits excellent refrigerating capacity as compared to conventional HFO refrigerants, particularly HCFO-1233zd (E). Accordingly, the refrigerant of the present invention can be suitably used as an alternative for a conventional HFO refrigerant, particularly for HCFO-1233zd (E).

The refrigerant of the present invention represented by general formula (1) preferably has a boiling point of -15 to 200°C, more preferably -15 to 0°C, even more preferably -15 to - 5°C, and most preferably -13 to -5°C. Because of having such a boiling point, the refrigerant (or refrigerant composition or refrigerant oil-containing working fluid) of the present invention is less likely to lead to a negative pressure state during operation when applied in a large air conditioner, and can reduce the risk of pipe corrosion due to entrapped air.

The refrigerant of the present invention represented by general formula (1) has low flammability. The combustion rate is not limited, and it is preferably 10 cm/sec or less. The refrigerant having a combustion rate in this range ensures excellent low flammability. The combustion rate is more preferably 5 cm/sec or less. The combustion rate used in this specification is a value measured with an apparatus and method according to ASHRAE Standard 34-2013 and ASHRAE Standard 34-2013 Appendix B2.

The combustion rate and the combustion concentration lower limit of 3,3,3-trifluoropropyne that has low flammability and a triple bond as in the refrigerant of the present invention are respectively 3.6 cm/s and 3.9 vol%. The combustion concentration lower limit of the refrigerant of the present invention is 5.5 vol% or more; the compound of the present invention has a narrower combustion range and a slower combustion rate than those of 3,3,3-trifluoropropyne. This indicates that the refrigerant of the present invention has low flammability.

The refrigerant of the present invention represented by general formula (1) has GWP of approximately less than 10.

Specific examples of the refrigerant of the present invention represented by general formula (1) include pentafluorobutyne (PFB), heptafluoropentyne, decafluoro hexyne, and nonafluoro hexyne. Of these, PFB is the most preferred in view of the boiling point. PFB has a boiling point of about -13°C and GWP of less than 10.

The refrigerant of the present invention represented by general formula (1) may sometimes comprises at least one member selected from the group consisting of acetone, R23, R125, methylene chloride, 3,3,3-trifluoro propyne, and acetylene as a side product according to the conditions during preparation. Since these side products are strictly different from the refrigerant of the present invention represented by general formula (1), the amount of the side products is preferably less than 5 mass% relative to the entire refrigerant (all refrigerant components), including the refrigerant of the present invention and the side products.

### 1.2 Equipment to which the present invention is applied

The refrigerant of the present invention can be widely used as a working fluid for known refrigerant applications in 1) a refrigeration method comprising operating a refrigeration cycle and 2) a method for operating a refrigerating machine that operates a refrigeration cycle. The refrigeration cycle herein means performing energy conversion by circulating in the refrigerating machine the refrigerant of the present invention in the state of the single refrigerant, or in the state of a refrigerant composition or a refrigerant oil-containing working fluid explained below, through a compressor.

Accordingly, the present invention includes the invention of use of the refrigerant (or composition comprising the refrigerant) of the present invention in a refrigeration method, the invention of use of the refrigerant (or composition comprising the refrigerant) of the present invention in a method of operating a refrigerating machine etc., and the invention of a refrigerating machine or the like comprising the refrigerant (or composition comprising the refrigerant) of the present invention.

Refrigerating machines, large air conditioners, or industrial process coolers for which the refrigerant (or composition comprising the refrigerant) of the present invention can be applied are not limited. Examples include room air conditioners, packaged air conditioners for stores, packaged air conditioners for buildings, packaged air conditioners for equipment, separate air conditioners in which one or more indoor units and outdoor units are interconnected with a refrigerant pipe, window air conditioners, portable air conditioners, roof top or central air conditioners in which cold air and warm air are conveyed through a duct, gas engine heat pumps, air conditioners for trains, air conditioners for automobiles, built-in showcases, separate showcases, refrigerator freezers for business, ice machines, integrated refrigerating machines, vending machines, car air conditioners, refrigerating machines for cooling containers or refrigerators for marine shipping, chiller units, turbo refrigerating machines, or apparatuses exclusively used for a heating cycle. Examples of apparatuses exclusively used for the heating cycle include water heating devices, floor heating devices, and snow-melting devices. Since the refrigerant of the present invention (or composition comprising the refrigerant) is less likely to lead to a negative-pressure state during operation, excellent effects can be easily obtained when the refrigerant is applied in a large air conditioner among the above.

### 2. Refrigerant composition

The refrigerant composition of the present invention at least includes the refrigerant of the present invention and can be used for the same applications as the refrigerant of the present invention. Further, by mixing with at least a refrigerant oil, the refrigerant composition of the present invention can be used for obtaining a working fluid for refrigerating machines.

The refrigerant composition of the present invention further comprises at least one other component in addition to the refrigerant of the present invention. The refrigerant composition of the present invention may optionally comprise at least one of the other components shown below. As described above, when the refrigerant composition of the present invention is used as a working fluid for refrigerating machines etc., it is mixed with at least a refrigerant oil for use. Preferably, the refrigerant composition of the present invention is substantially free from refrigerant oil. Specifically, in the refrigerant composition of the present invention, the amount of refrigerant oil relative to the entire refrigerant composition is preferably 0 to 1 mass%, and more preferably 0 to 0.1 mass%.

### 2.1. Tracer

A tracer is added to the refrigerant composition of the present invention at a detectable concentration such that when the refrigerant composition has been diluted, contaminated, or has undergone other changes, the tracer can trace the changes.

The refrigerant composition of the present invention may comprise a single tracer or two or more tracers.

The tracer is not limited, and can be suitably selected from typically used tracers.

Examples of tracers include hydrofluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon or a fluoroether. (Those different from the compound represented by general formula (1) are used.)

### 2.2 Ultraviolet fluorescent dye

The refrigerant composition of the present invention may comprise a single ultraviolet fluorescent dye or two or more ultraviolet fluorescent dyes.

The ultraviolet fluorescent dye is not limited, and can be suitably selected from typically used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.3. Stabilizer

The refrigerant composition of the present invention may comprise a single stabilizer or two or more stabilizers.

The stabilizer is not limited, and can be suitably selected from typically used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenyl amine.

Other examples include butylhydroxyxylene and benzotriazole.

The content of the stabilizer is not limited. Typically, the content of the stabilizer is preferably 0.01 to 5 parts by mass, and more preferably 0.05 to 2 parts by mass, per 100 parts by mass of the refrigerant.

Although there is no limitation, the stability of the refrigerant composition can be evaluated by a commonly used method. Examples of such methods include an evaluation method using the amount of free fluorine ions as an index according to ASHRAE Standard 97-2007, and the like. There is, for example, another evaluation method using the total acid number as an index. This method can be performed, for example, according to ASTM D 974-06.

### 2.4 Polymerization inhibitor

The refrigerant composition of the present invention may comprise a single polymerization inhibitor or two or more polymerization inhibitors.

The polymerization inhibitor is not limited, and can be suitably selected from typically used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Typically, the content of the polymerization inhibitor is preferably 0.01 to 5 parts by mass, and more preferably 0.05 to 2 parts by mass, per 100 parts by mass of the refrigerant.

### 2.5 Other components that can be contained in the refrigerant

### composition

The following components can be contained in the refrigerant composition of the present invention.

For example, fluorinated hydrocarbons that are different from the refrigerants mentioned above can be contained. Examples of fluorinated hydrocarbons used as other components are not limited. At least one fluorinated hydrocarbon selected from the group consisting of HCFC-1122, HCFC-124, and CFC-1113 can be used.

As one other component, at least one halogenated organic compound represented by formula (A): CₘHₙXₚ, wherein X is individually fluorine, chlorine, or bromine; m is 1 or 2; 2m+2 is greater than or equal to n+p; and p is greater than or equal to 1 can be contained. The halogenated organic compound is not limited, and preferable examples include difluorochloromethane, chloromethane, 2-chloro-1,1,1,2,2-pentafluoroethane, 2-chloro-1,1,1,2-tetrafluoroethane, 2-chloro-1,1-difluoroethylene, and trifluoroethylene.

As one other component, at least one organic compound represented by formula (B): CₘHₙXₚ, wherein X is independently an atom other than a halogen atom; m is 1 or 2; 2m+2 is greater than or equal to n+p; and p is greater than or equal to 1 can be contained. The organic compound is not limited, and preferable examples include propane and isobutane.

The amounts of the fluorinated hydrocarbon, halogenated organic compound represented by formula (A), and organic compound represented by formula (B) are not limited. The total amount of these is preferably 0.5 mass% or less, more preferably 0.3 mass% or less, and particularly preferably 0.1 mass% or less relative to the total amount of the refrigerant composition.

### 3. Refrigerant oil-containing working fluid

The refrigerant oil-containing working fluid of the present invention at least includes the refrigerant or the refrigerant composition used in the present invention, and a refrigerant oil. Specifically, the refrigerant oil-containing working fluid used in the present invention can be obtained by mixing together the refrigerant or refrigerant composition with a refrigerant oil used in a compressor of a refrigerating machine. The refrigerant oil is typically contained in an amount of 1 to 50 mass% in the refrigerant oil-containing working fluid.

### 3.1 Refrigerant oil

The refrigerant oil-containing working fluid of the present invention may comprise a single refrigerant oil or two or more refrigerant oils.

The refrigerant oil is not limited, and can be suitably selected from typically used refrigerant oils. In this case, refrigerant oils that are superior in increasing action on the miscibility with the mixture and stability of the mixture, for example, are suitably selected as necessary.

The base oil of the refrigerant oil is preferably, for example, at least one member selected from the group consisting of polyalkylene glycols (PAG), polyol esters (POE), and polyvinyl ethers (PVE).

The refrigerant oil may further comprise an additive in addition to the base oil. The additive may be at least one member selected from the group consisting of antioxidants, extreme-pressure agents, acid scavengers, oxygen scavengers, copper deactivators, anticorrosive agents, oily agents, and antifoaming agents.

A refrigerant oil with a kinematic viscosity of 5 to 400 cSt at 40°C is preferable from the standpoint of lubrication.

The refrigerant oil-containing working fluid of the present invention may further optionally comprise at least one additive. Examples of additives include compatibilizing agents described below.

### 3.2 Compatibilizing agent

The refrigerant oil-containing working fluid of the present invention may comprise a single compatibilizing agent or two or more compatibilizing agents.

The compatibilizing agent is not limited, and can be suitably selected from typically used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkane. The compatibilizing agent is particularly preferably a polyoxyalkylene glycol ether.

### Detergent or propellant applications

The compound of the present invention represented by the following general formula (1): CmHnFxCly (1), wherein m is 4≤m≤10, n+x+y is equal to 2m-2, and the compound has a triple bond in its molecule, can be used for applications such as detergents or propellants.

In general formula (1), m may be 4≤m≤10, and is preferably 4≤m≤5. Specifically, the compound of the present invention is a triple bond compound having 4 or more carbon atoms.

The compound of the present invention represented by general formula (1) preferably has a boiling point of -15 to 200°C, more preferably -15 to 0°C, even more preferably -15 to - 5°C, and most preferably -13 to -5°C. Having such a boiling point indicates that the compound of the present invention is suitable as a propellant.

The compound of the present invention represented by general formula (1) has low flammability. The combustion rate is not limited, and is preferably 10 cm/sec or less. The compound having a combustion rate in this range ensures excellent low flammability. The combustion rate is more preferably 5 cm/sec or less. The combustion rate used in this specification is a value measured with an apparatus and method according to ASHRAE Standard 34-2013 and ASHRAE Standard 34-2013 Appendix B2.

The combustion rate and the combustion concentration lower limit of 3,3,3-trifluoropropyne that has low flammability and a triple bond as in the refrigerant of the present invention are respectively 3.6 cm/s and 3.9 vol%. The combustion concentration lower limit of the compound of the present invention is 5.5 vol% or more; the compound of the present invention has a narrower combustion range and a slower combustion rate than those of 3,3,3-trifluoropropyne. This indicates that the compound of the present invention has low flammability.

The compound of the present invention represented by general formula (1) has GWP of approximately less than 10.

Specific examples of the compound of the present invention represented by general formula (1) include pentafluorobutyne (PFB), heptafluoropentyne, decafluoro hexyne, and nonafluoro hexyne. Of these, PFB is the most preferred in view of the boiling point. PFB has a boiling point of about -13°C and GWP of less than 10.

The compound of the present invention represented by general formula (1) sometimes comprises at least one member selected from the group consisting of acetone, R23, R125, methylene chloride, 3,3,3-trifluoro propyne, and acetylene as a side product according to the conditions during preparation. Since these side products are strictly different from the compound of the present invention represented by general formula (1), the amount of the side products is preferably less than 5 mass% relative to the total amount of the compound of the present invention and the side products.

The compound of the present invention is also effective for applications such as detergents or propellants. Accordingly, the present invention includes the invention of use of the compound represented by formula (1) or a composition obtained by adding an arbitrary additive to the compound as a detergent or propellant, and the invention of cleaning equipment or spraying equipment that uses the compound or the composition obtained by adding an arbitrary additive to the compound.

Various oils, including lubricating oils, such as silicone oil, fluorine-based oil, mineral-based oil, grease, and wax, are used for various applications. These oils can be singly applied to substrate surfaces or machine part surfaces in need of lubrication; however, in consideration of predetermined necessity or purpose, they are often used after being dissolved in solvents. For example, these oils are used when it is necessary to adjust viscosity etc., or used for the purpose of forming lubricating films of the oils on the surfaces to which the oils are applied. Moreover, those that have the same formulation as these solvents and that are used to dissolve various oils for removal (cleaning) are particularly called detergents, cleaning solvents, etc.

Detergents require properties such as excellent solubility, compatibility with machine parts and system constituent elements (O-rings, seals, etc.) to which a lubricant is applied, safety, low inflammability, ease of use, and quick drying. It is necessary to avoid leaving a residue that may cause problems later.

Conventionally used non-flammable solvents are fluorine-based solvents with low toxicity, represented by trade names "Asahiklin AK-225," "Zeorola H," "Novec," etc.

However, it is stated that these conventional fluorine-based solvents or detergents, which are advantageous in non-flammability and low toxicity, have problems in terms of environmental damage, such as the possibility of ozone layer depletion and possibility of contribution to global warming. In consideration of these circumstances, products such as various hydrofluoroolefins and 1,2-dichloroethylene (boiling point: 48°C) have been developed as environmentally friendly solvents. Examples include chlorofluoroolefin (boiling point: 46°C), hydrochlorofluoroolefin (boiling point: 53°C), a mixture of 1,2-dichloroethylene and hydrofluoroolefin mentioned above, and cyclic hydrofluorocarbon (boiling point: 83°C).

In contrast, however, these environmentally friendly solvents have various problems such as low solubility and the solvents themselves being flammable.

The compound represented by general formula (1) is a detergent that can be handled safely, has a low flammability, and has sufficient solubility in known lubricating oils, such as silicone oil, fluorine-based oil, mineral-based oil, grease, and wax. The compound represented by general formula (1) can be easily removed after washing, without leaving problematic residue. When used as a detergent, the compound represented by general formula (1) preferably has a boiling point of 40 to 100°C.

### Examples

The present invention is explained in detail below with reference to Examples and Comparative Examples. However, the present invention is not limited to these Examples.

### Example 1 and Comparative Example 1

Pentafluorobutyne (PFB) was prepared as the refrigerant of Example 1, and HCFO-1233zd (E) was prepared as the refrigerant of Comparative Example 1.

Using the above refrigerants and a large air conditioner (packaged air conditioner for buildings), the COPc, refrigerating capacity (kJ/m³), density (suction) (kg/m³), suction pressure (MPa), discharge pressure (MPa), and discharge temperature (°C) were evaluated.

The operation conditions (cycle conditions) of the large air conditioner were such that the evaporation temperature of the refrigerant in the evaporator was 0°C, the condensation temperature of the refrigerant in the condenser was 40°C, the superheat temperature was 5°C, and the supercooling temperature was 0°C.

Table 1 shows the results of each evaluation.

**Table 1**

| Refrigerant | | PFB | 1233zdE |
|---|---|---|---|
| COPc | | 3.80 | 4.10 |
| Refrigerating capacity | (kJ/m³) | 1113 | 442 |
| Density (suction) | (kg/m³) | 10.59 | 2.78 |
| Suction pressure | (MPa) | 0.162 | 0.048 |
| Discharge pressure | (MPa) | 0.573 | 0.216 |
| Discharge temperature | (°C) | 42.4 | 56.9 |

As is clear from the results of Table 1, PFB, which is the compound of the present invention, exhibits excellent refrigerating capacity, as compared to HCFO-1233zd (E), which is one of the HFO refrigerants.

### Example 2 and Comparative Example 2

Pentafluorobutyne (PFB) was prepared as the refrigerant of Example 2, and HCFO-1233zd (E) was prepared as the refrigerant of Comparative Example 2.

Using the above refrigerants and a turbo refrigerating machine (packaged air conditioner for buildings), the COPc, refrigerating capacity (kJ/m³), density (suction) (kg/m³), suction pressure (MPa), discharge pressure (MPa), and discharge temperature (°C) were evaluated.

The operation conditions (cycle conditions) of the turbo refrigerating machine were such that the evaporation temperature of the refrigerant in the evaporator was 5°C, the condensation temperature of the refrigerant in the condenser was 35°C, the superheat temperature was 0°C, and the supercooling temperature was 5°C.

Table 2 shows the results of each evaluation.

**Table 2**

| Refrigerant | | PFB | 1233zdE |
|---|---|---|---|
| COPc | | 5.77 | 6.01 |
| Refrigerating capacity | (kJ/m³) | 1501 | 594 |
| Density (suction) | (kg/m³) | 12.81 | 3.47 |
| Suction pressure | (MPa) | 0.193 | 0.060 |
| Discharge pressure | (MPa) | 0.498 | 0.183 |
| Discharge temperature | (°C) | 35.0 | 43.8 |

As is clear from the results of Table 2, PFB, which is the compound of the present invention, exhibits excellent refrigerating capacity, as compared to HCFO-1233zd (E), which is one of the HFO refrigerants.

### Example 3 and Comparative Example 3

Pentafluorobutyne (PFB) was prepared as the refrigerant of Example 3, and HCFO-1233zd (E) was prepared as the refrigerant of Comparative Example 3.

Using the above refrigerants and a two-stage cycle turbo refrigerating machine (packaged air conditioner for buildings), the COPc, refrigerating capacity (kJ/m³), density (suction) (kg/m³), suction pressure (MPa), discharge pressure (MPa), and discharge temperature (°C) were evaluated.

The operation conditions (cycle conditions) of the two-stage cycle turbo refrigerating machine were such that the evaporation temperature of the refrigerant in the evaporator was 5°C, the condensation temperature of the refrigerant in the condenser was 35°C, the superheat temperature was 0°C, and the supercooling temperature was 5°C.

Table 3 shows the results of each evaluation.

**Table 3**

| Refrigerant | | PFB | 1233zdE |
|---|---|---|---|
| COPc | | 6.36 | 6.47 |
| Refrigerating capacity | (kJ/m³) | 2554 | 640 |
| Density (suction) | (kg/m³) | 18.01 | 3.47 |
| Suction pressure | (MPa) | 0.309 | 0.060 |
| Discharge pressure | (MPa) | 0.765 | 0.183 |
| Discharge temperature | (°C) | 37.6 | 39.0 |

As is clear from the results of Table 3, PFB, which is the compound of the present invention, exhibits excellent refrigerating capacity, as compared to HCFO-1233zd (E), which is one of the HFO refrigerants.

### Example 4 and Comparative Example 4

Pentafluorobutyne (PFB) was prepared as the refrigerant of Example 4, and HCFO-1233zd (E) was prepared as the refrigerant of Comparative Example 4.

Using the above refrigerants and a screw chiller (packaged air conditioner for buildings), the COPc, refrigerating capacity (kJ/m³), density (suction) (kg/m³), suction pressure (MPa), discharge pressure (MPa), and discharge temperature (°C) were evaluated.

The operation conditions (cycle conditions) of the screw chiller were such that the evaporation temperature of the refrigerant in the evaporator was 5°C, the condensation temperature of the refrigerant in the condenser was 45°C, the superheat temperature was 0°C, and the supercooling temperature was 5°C.

Table 4 shows the results of each evaluation.

**Table 4**

| Refrigerant | | PFB | 1233zdE |
|---|---|---|---|
| COPc | | 4.03 | 4.31 |
| Refrigerating capacity | (kJ/m³) | 1341 | 551 |
| Density (suction) | (kg/m³) | 12.81 | 3.47 |
| Suction pressure | (MPa) | 0.193 | 0.060 |
| Discharge pressure | (MPa) | 0.655 | 0.252 |
| Discharge temperature | (°C) | 45.0 | 55.3 |

As is clear from the results of Table 4, PFB, which is the compound of the present invention, exhibits excellent refrigerating capacity, as compared to HCFO-1233zd (E), which is one of the HFO refrigerants.

### Example 5

Nona fluorohexyne (n-C₄F₉C≡CH) was prepared as the detergent (solvent) of Example 5, and 50 g of silicone oil having a viscosity of about 10,000 cP(s) was mixed with 100 g of nona fluorohexyne (n-C₄F₉C≡CH). As a result, the two components were compatible with each other, thus obtaining a homogeneous solution.

## Claims

1. A composition comprising a refrigerant, the refrigerant comprising a compound represented by the following general formula (1):
CmHnFxCly (1)
wherein m is 4≤m≤10, n+x+y is equal to 2m-2, and the compound has a triple bond in its molecule.

2. The composition according to claim 1, wherein the compound has a boiling point of -15 to 200°C.

3. The composition according to claim 1, wherein the compound has a boiling point of -15 to -5°C.

4. The composition according to claim 1, wherein the compound is pentafluorobutyne.

5. The composition according to any one of claims 1 to 4, wherein the refrigerant comprises at least one member selected from the group consisting of acetone, R23, R125, methylene chloride, 3,3,3-trifluoropropyne, and acetylene, and the total amount of acetone, R23, R125, methylene chloride, 3,3,3-trifluoropropyne, and acetylene is less than 5 mass% relative to the entire refrigerant.

6. The composition according to any one of claims 1 to 5, wherein the composition further comprises a refrigerant oil and is used as a refrigerant oil-containing working fluid.

7. A refrigerating machine, large air conditioner, or industrial process cooler, each comprising the composition according to any one of claims 1 to 6 as a working fluid.

8. The refrigerating machine, large air conditioner, or industrial process cooler according to claim 7, which is a room air conditioner, packaged air conditioner for stores, packaged air conditioner for buildings, packaged air conditioner for equipment, separate air conditioner in which one or more indoor units and outdoor units are interconnected with a refrigerant pipe, window air conditioner, portable air conditioner, roof top or central air conditioner in which cold air and warm air are conveyed through a duct, gas engine heat pump, air conditioner for trains, air conditioner for automobiles, built-in showcase, separate showcase, refrigerator freezer for business, ice machine, integrated refrigerating machine, vending machine, car air conditioner, refrigerating machine for cooling containers or refrigerators for marine shipping, chiller unit, turbo refrigerating machine, or apparatus exclusively used for a heating cycle.

9. A composition comprising a compound represented by the following general formula (1):
CmHnFxCly (1)
wherein m is 4≤m≤10, n+x+y is equal to 2m-2, and the compound has a triple bond in its molecule, and
the composition being used for detergents or propellants.

10. The composition according to claim 9, wherein the compound has a boiling point of -15 to 200°C.

11. The composition according to claim 9, wherein the compound has a boiling point of -15 to -5°C.

12. The composition according to claim 9, wherein the compound is pentafluorobutyne.

13. The composition according to any one of claims 9 to 12, comprising at least one member selected from the group consisting of acetone, R23, R125, methylene chloride, 3,3,3-trifluoropropyne, and acetylene, wherein
the total amount of acetone, R23, R125, methylene chloride, 3,3,3-trifluoropropyne, and acetylene is less than 5 mass% relative to the total amount of the compound, acetone, R23, R125, methylene chloride, 3,3,3-trifluoropropyne, and acetylene.
